# EUROPÄISCHE PATENTANMELDUNG

(11) **EP 3 586 940 A1**
(43) Veröffentlichungstag der Anmeldung: **01.01.2020**
(21) Anmeldenummer: 19183217.9
(22) Anmeldetag: 28.06.2019
(51) Int. Cl.: B01D 53/04, F16L 59/065

(54) **VAKUUMDÄMMKÖRPER**

(30) Priorität: 28.06.2018 DE 102018115605
(71) Anmelder: Liebherr-Hausgeräte Ochsenhausen GmbH, 88416 Ochsenhausen (DE)
(72) Erfinder: Kerstner, Martin, 97072 Würzburg (DE); Blersch, Thomas, 88433 Schemmerhofen (DE)
(74) Vertreter: Herrmann, Uwe

(57) **Zusammenfassung**

Die vorliegende Erfindung betrifft einen Vakuumdämmkörper umfassend wenigstens eine vakuumdichte Umhüllung sowie wenigstens ein Kernmaterial, das von der Umhüllung umgeben ist, wobei die Umhüllung mit wenigstens einer Öffnung, insbesondere mit wenigstens einem Evakuierstutzen zur Evakuierung des von der Umhüllung umgebenen Raums versehen ist, wobei sich in dem Vakuumdämmkörper wenigstens eine Sorptionspumpe mit einem Strömungsverteiler (30, 40) befindet und wobei in der Sorptionspumpe adsorbierendes Material angeordnet ist, wobei die Sorptionspumpe eine Grundplatte (10) aufweist, die eine Öffnung (12) aufweist, die mit der Öffnung (12) der Umhüllung in Strömungsverbindung steht, wobei zwischen der Grundplatte (10) und dem Strömungsverteiler (30, 40) ein Freiraum vorgesehen ist, in dem sich das adsorbierendes Material teilweise oder vollständig befindet, und wobei sowohl die Grundplatte (10) als auch der Strömungsverteiler (30, 40) teilweise oder vollständig aus Metall ausgeführt sind.

## Beschreibung

Die vorliegende Erfindung betrifft einen Vakuumdämmkörper umfassend wenigstens eine vakuumdichte Umhüllung sowie wenigstens ein Kernmaterial, das von der Umhüllung umgeben ist, wobei die Umhüllung mit wenigstens einer Öffnung, insbesondere mit wenigstens einem Evakuierstutzen zur Evakuierung des von der Umhüllung umgebenen Raums versehen ist, wobei sich in dem Vakuumdämmkörper wenigstens eine Sorptionspumpe mit einem Strömungsverteiler befindet und wobei in der Sorptionspumpe adsorbierendes Material angeordnet ist.

Aus dem Stand der Technik ist es bekannt, beispielsweise zur Wärmedämmung von Kühl- bzw. Gefriergeräten Vakuumdämmkörper einzusetzen, die sich in dem Bereich zwischen dem Außenmantel des Gerätes und dem Innenbehälter bzw. der Innenseite und der Außenseite der Tür oder eines sonstigen Verschlusselementes des Gerätes befinden. Derartige Vakuumdämmkörper umfassen eine vakuumdichte Umhüllung und wenigstens einen von der Umhüllung umgebenen Raum, d.h. Vakuumbereich, in dem Vakuum herrscht und in dem sich ein Stütz- bzw. Kernmaterial befindet, das dem Vakuumdämmkörper die erforderliche mechanische Stabilität verleiht und das zudem verhindert, dass die Seiten der Umhüllung bedingt durch das herrschende Vakuum aneinander anliegen.

Derartige Vakuumdämmkörper sind empfindlich gegenüber einem Anstieg des Gasdrucks in dem Vakuumbereich. Ein solches Einbringen von Gas bzw. ein solcher Anstieg des Gasdruckes setzt die Wärmeleitfähigkeit herauf und verringert somit die Wirksamkeit des Wärmedämmkörpers. Insbesondere die Permeation von Wasser durch die Umhüllung des Dämmkörpers ist aufgrund der höheren Permeationsraten im Vergleich zu Sauerstoff und Stickstoff ausschlaggebend für einen Anstieg der Wärmeleitfähigkeit des Vakuumdämmkörpers. Um dieses Phänomen zu verhindern bzw. möglichst gering zu halten ist es bekannt, ein Material mit einem hohen Adsorptionsvermögen für Wasser in den Vakuumbereich zu geben, um auch bei eindringendem Wasserdampf den Partialdruck im Vakuumbereich gering zu halten. Als solches Material kommt beispielsweise ein Zeolith-Material in Betracht.

Des Weiteren sind Materialien bekannt, die durch Chemisorption von Sauerstoff und Stickstoff deren Partialdruck gering halten. Diese Materialien werden als "Getter" bezeichnet und dienen auch dazu, die Alterung des Vakuumdämmkörpers aufgrund von Gaseintrag dieser Gase zu verzögern.

Aus dem Stand der Technik ist es bekannt, die Vakuumerzeugung in dem Vakuumdämmkörper in einer Vakuumkammer vorzunehmen, was mit einem vergleichsweise hohen apparativen Aufwand verbunden ist. Einfacher ist es, den Vakuumdämmkörper mit einem Evakuierstutzen zu versehen, an dem Unterdruck angelegt wird und durch den Gas aus dem Vakuumbereich abgezogen wird. In diesem Fall muss das gesamte Gas oder ein wesentlicher Teil des Gases aus dem Innenraum des Vakuumdämmkörpers durch den Evakuierstutzen entfernt werden. Dazu muss das Gas durch das genannte Kernmaterial zu dem Evakuierstutzen strömen bzw. diffundieren.

Um diesen Prozess vollständiger und schneller zu gestalten, ist es aus der DE 10 2013 016 774 A1 bekannt, eine Sorptionspumpe einzusetzen, worunter im Rahmen der vorliegenden Erfindung ein Anordnung verstanden wird, die mit der Öffnung der Umhüllung kommuniziert, d.h. in Strömungsverbindung steht und die einen Aufnahmebereich aufweist, in dem adsorbierendes Material aufgenommen oder aufnehmbar ist. Die Sorptionspumpe ist so angeordnet, dass das aus dem Vakuumdämmkörper zu entfernende Gas bei Anlegen eines Vakuums an der Öffnung der Umhüllung zunächst durch die Sorptionspumpe und dann - abgesehen von dem in der Sorptionspumpe adsorbierten Bestandteil des Gases - durch die Öffnung der Umhüllung strömt und auf diese Weise aus dem Vakuumdämmkörper entfernt wird.

Bringt man das adsorbierende Material, beispielsweise das Trockenmaterial, wie Zeolithe oder sonstige adsorbierende Materialien, wie beispielsweise die genannten Getter in den Vakuumdämmkörper ein, so müssen zusätzlich zu den in den Poren des Kernmaterials vorhandenen Gasmolekülen auch die schon an der Oberfläche des Trockners bzw. des adsorbierenden Materials adsorbierten Gasteilchen beim Evakuiervorgang entfernt werden. Diese lösen sich jedoch erst bei geringen Drücken von der Oberfläche des adsorbierenden Materials. Da unter Umständen keine Gasströmung mehr vorhanden ist, d.h. keine oder kaum noch Konvektion stattfindet, müssen diese Gasteile zu dem Evakuierstutzen diffundieren. Dies gilt entsprechend für in den Vakuumbereich eingebrachte Getter.

Erfindungsgemäß ist nun vorgesehen, das Gase, insbesondere Wasser und / oder Stickstoff und / oder Sauerstoff, adsorbierende Material teilweise oder insgesamt im Bereich der genannten Öffnung des Vakuumdämmkörpers anzuordnen. Dort tritt während des Evakuiervorgangs der geringste Druck auf und abgesehen davon ist der Strömungsweg der an dem adsorbierenden Material gebundenen Gasteilchen minimiert, da sich das adsorbierende Material bereits im Bereich der Öffnung befindet. Wird somit das adsorbierende Material, wie beispielsweise ein Trockner bzw. Getter in unmittelbarer Nähe des Evakuierstutzens bzw. der Öffnung angeordnet ergibt sich somit insgesamt eine besonders effiziente Vakuumerzeugung in dem Vakuumbereich des Vakuumdämmkörpers.

Die aus dem Stand der Technik bekannte Sorptionspumpe weist eine große Bauhöhe auf und ist zudem mit dem Nachteil verbunden, dass diese aus Kunststoff besteht, was mit Ausgasungen verbunden ist, die die Vakuumerzeugung bzw. das Halten des Vakuums auf einem gewünschten Niveau erschweren. Dies führt zu einer Minderung der wärmedämmenden Eigenschaften des Vakuumdämmkörpers über die Zeit und ist daher nachteilig.

Der vorliegenden Erfindung liegt somit die Aufgabe zugrunde, ein Vakuumdämmkörper der eingangs genannten Art dahingehend weiterzubilden, dass der Umfang der Ausgasung ausgehend von der Sorptionspumpe gegenüber der bekannten Sorptionspumpe verringert wird.

Diese Aufgabe wird durch einen Vakuumdämmkörper mit den Merkmalen des Anspruchs 1 gelöst. Danach ist vorgesehen, dass die Sorptionspumpe eine Grundplatte aufweist, die eine Öffnung aufweist, die mit der Öffnung der Umhüllung kommuniziert, wobei zwischen der Grundplatte und dem Strömungsverteiler ein Freiraum vorgesehen ist, in dem sich das adsorbierendes Material teilweise oder vollständig befindet, wobei sowohl die Grundplatte als auch der Strömungsverteiler teilweise oder vollständig aus Metall ausgeführt sind.

Die zumindest teilweise Verwendung von Metall für die Grundplatte und für den Strömungsverteiler vermindert oder verhindert die Ausgasung dieser Bauteile, so dass die vorgenannten Nachteile der Beeinträchtigung des Vakuums eingeschränkt oder ganz vermieden werden.

Abgesehen davon bringt der beanspruchte Aufbau der Sorptionspumpe den Vorteil mit sich, dass diese kompakt ist und gegenüber der bekannten Anordnung weniger Bauraum in Anspruch nimmt, da deren Bauhöhe kleiner ist als bei der aus dem Stand der Technik bekannten Sorptionspumpe.

Vorzugsweise sind die Elemente der erfindungsgemäßen Sorptionspumpe, die aus Metall bestehen oder Metall aufweisen, magnetisch, so dass sie automatisch greifbar sind, was im Rahmen der Fertigung von Vorteil ist.

In einer denkbaren Ausführung der Erfindung besteht die gesamte Sorptionspumpe und insbesondere die Grundplatte sowie der Strömungsverteiler aus Blech oder aus einem sonstigen metallischen Werkstoff.

Der Strömungsverteiler ist vorzugsweise derart ausgebildet ist, dass er den effektiven Strömungsquerschnitt beim Evakuieren in Strömungsrichtung des Gases aus der Umhüllung heraus erhöht. Die größte von Gas durchströmte Querschnittsfläche des Strömungsverteilers ist in dieser Ausführungsform größer als die von Gas durchströmte Querschnittsfläche der Öffnung der Umhüllung.

Denkbar ist es, dass der Strömungsverteiler mehrteilig ausgeführt ist und aus einem Grundkörper und einem darin einfügbaren bzw. eingefügten Einsatz ausgeführt ist. Vorzugsweise bestehen der Einsatz und/oder der Grundkörper aus Metall, wie z.B. Blech, oder weisen dieses auf.

Die Sorptionspumpe und/oder einer oder mehrere von deren Bestandteile sind vorzugsweise so ausgeführt, dass diese stapelbar und magazinfähig sind.

Der Strömungsverteiler kann eine oder mehrere Vorsprünge aufweisen, insbesondere Dome, auf denen die Grundplatte aufgestützt ist. Die Vorsprünge können einen integralen Bestandteil des Strömungsverteilers darstellen.

Vorzugsweise sind der oder die Vorsprünge an dem genannten Einsatz angeordnet.

Das adsorbierende Material kann als Mehrzahl von einzelnen Körpern, vorzugsweise von einzelnen Kugeln und besonders bevorzugt als Kugelschüttung ausgebildet sein. Statt Kugeln oder zusätzlich zu Kugeln kommen auch beliebige anders geformte Teilchen in Betracht.

Denkbar ist es, dass das adsorbierende Material derart ausgebildet ist, dass dieses Wasser und/oder Stickstoff und/oder Sauerstoff adsorbiert und/oder dass es sich bei dem adsorbierenden Material um wenigstens einen Getter und/oder Zeolith handelt.

Das adsorbierende Material ist vorzugsweise gleichmäßig in der Sorptionspumpe verteilt.

Vorzugsweise wird eine Menge des adsorbierenden Materials zwischen 150 g und 450 g, bevorzugt zwischen 200 g und 400 g und besonders bevorzugt von 300 g (± 25 g) in der Sorptionspumpe verwendet.

Die Grundplatte und/oder der Strömungsverteiler können eine zur Umhüllung des Vakuumdämmkörpers gewandte Außenseite und eine dieser gegenüberliegend angeordnete, d.h. zum Kernmaterial weisende Innenseite aufweisen, wobei sowohl die Außenseite als auch die Innenseite der Grundplatte und/oder des Strömungsverteilers teilweise oder vollständig mit einem siegelfähigen bzw. versiegelten Material beschichtet sind.

Dies bringt den Vorteil mit sich, dass diese Teile, die vorzugsweise als Metallteile ausgeführt sind, direkt durch Siegeln miteinander verbunden werden können. Der Strömungsverteiler kann somit durch Siegeln mit der Grundplatte verbunden werden. Des Weiteren kann die Grundplatte auf Ihrer zur Umhüllung gewandten Außenseite mit der Innenseite der Umhüllung vakuumdicht versiegelt werden.

Des Weiteren kann ein Ventilteller vorgesehen sein, der zum Verschließen der Öffnung der Grundplatte dient oder mittels dessen die Öffnung der Grundplatte verschlossen ist, wobei der Ventilteller vorzugsweise eine siegelfähige bzw. versiegelte Dichtung, z.B. aus Polyethylen, aufweist, die zum vakuumdichten Verschließen der Öffnung dient. Somit ist eine zuverlässige dauerhafte Endversiegelung möglich.

Eine primäre Abdichtung für den Transport ist durch einen vorteilhafte Ausgestaltung möglich, bei der am Außenrand des Ventiltellers ein Dichtring angebracht ist.

In einer weiteren Ausführungsform ist vorgesehen, dass sich über die Innenseite, d.h. über die zum Kernmaterial des Vakuumdämmkörpers gerichtete Seite der Sorptionspumpe ein Flies erstreckt, um das Adsorptionsmittel in der Sorptionspumpe zu fixieren, wobei vorzugsweise vorgesehen ist, dass das Flies mit dem Strömungsverteiler sowie auch mit der Grundplatte versiegelt ist.

Vorzugsweise ist die Sorptionspumpe rechteckig ausgebildet. Durch die Rechteckform ist die Sorptionspumpe auch für große Türen oder sonstige Verschlusselemente sowie für große Korpuswandungen geeignet.

Die vorliegende Erfindung betrifft ferner ein temperiertes Gerät mit einem temperierten Innenraum sowie mit einem Verschlusselement, mittels dessen der Innenraum verschließbar ist, wobei der temperierte Innenraum teilweise oder vollständig von einem Vakuumdämmkörper gemäß einem der Ansprüche 1 bis 10 umgeben ist und/oder wobei sich in dem Verschlusselement ein Vakuumdämmkörper gemäß einem der Ansprüche 1 bis 10 befindet.

Bei dem temperierten Gerät handelt es sich vorzugsweise um ein Kühl- und/oder Gefriergerät und/oder bei dem Verschlusselement um eine Tür oder ein Deckel oder eine Klappe des Gerätes.

Die vorliegende Erfindung betrifft des Weiteren die Verwendung einer Sorptionspumpe in einem Vakuumdämmkörper umfassend wenigstens eine vakuumdichte Umhüllung sowie wenigstens ein Kernmaterial, das von der Umhüllung umgeben ist, wobei die Umhüllung mit wenigstens einer Öffnung, insbesondere mit wenigstens einem Evakuierstutzen zur Evakuierung des von der Umhüllung umgebenen Raums, der auch als Vakuumbereich bezeichnet wird, versehen ist, vorzugsweise zur Verwendung in einem Vakuumdämmkörper gemäß einem der Ansprüche 1 bis 10 und/oder zur Verwendung in einem temperierten Gerät, vorzugsweise in einem Kühl- und/oder Gefriergerät und besonders bevorzugt in einem temperierten Gerät gemäß einem der Ansprüche 11 bis 13. Die Sorptionspumpe ist mit einem Strömungsverteiler ausgeführt, wobei die Sorptionspumpe eine Grundplatte aufweist, die eine Öffnung aufweist, die mit der Öffnung der Umhüllung kommuniziert, d.h. in Strömungsverbindung steht, wobei zwischen der Grundplatte und dem Strömungsverteiler ein Freiraum vorgesehen ist, in dem sich adsorbierendes Material befindet oder in dem adsorbierendes Material aufgenommen werden kann, wobei sowohl die Grundplatte als auch der Strömungsverteiler teilweise oder vollständig aus Metall ausgeführt sind.

Die Verwendung umfasst die Verwendung der Sorptionspumpe mit und ohne adsorbierendem Material, d.h. auch die noch mit adsorbierendem Material zu befüllende Sorptionspumpe.

Vorzugsweise ist die Sorptionspumpe gemäß dem kennzeichnenden Teil eines der Ansprüche 1 bis 9 ausgebildet.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente.

Bei der Umhüllung des Vakuumdämmkörpers handelt es sich vorzugsweise um eine Hochbarrierefolie.

Unter einer vakuumdichten Umhüllung bzw. unter dem Begriff Hochbarrierefolie wird vorzugsweise eine Umhüllung bzw. eine Folie verstanden, mittels derer der Gaseintrag in den Vakuumdämmkörper so stark reduziert ist, dass der durch Gaseintrag bedingte Anstieg in der Wärmeleitfähigkeit des Vakuumdämmkörpers über dessen Lebensdauer hinweg ausreichend gering ist. Als Lebensdauer ist beispielsweise ein Zeitraum von 15 Jahren, vorzugsweise von 20 Jahren und besonders bevorzugt von 30 Jahren anzusetzen. Vorzugsweise liegt der durch Gaseintrag bedingte Anstieg in der Wärmeleitfähigkeit des Vakuumdämmkörpers über dessen Lebensdauer bei < 100 % und besonders bevorzugt bei < 50 %.

Vorzugsweise ist die flächenspezifische Gasdurchgangsrate der Umhüllung bzw. der Verbindung bzw. der Hochbarrierefolie < 10⁻⁵ mbar * l / s *m² und besonders bevorzugt < 10⁻⁶ mbar * l / s *m² (gemessen nach ASTM D-3985). Diese Gasdurchgangsrate gilt für Stickstoff und Sauerstoff. Für andere Gassorten (insbesondere Wasserdampf) bestehen ebenfalls niedrige Gasdurchgangsraten vorzugweise im Bereich von < 10⁻² mbar * l / s * m² und besonders bevorzugt im Bereich von < 10⁻³ mbar * l / s * m² (gemessen nach ASTM F-1249-90). Vorzugsweise werden durch diese geringen Gasdurchgangsraten die vorgenannten geringen Anstiege der Wärmeleitfähigkeit erreicht.

Ein aus dem Bereich der Vakuumpaneele bekanntes Hüllsystem sind sogenannte Hochbarrierefolien. Darunter werden im Rahmen der vorliegenden Erfindung vorzugsweise Ein- oder Mehrschichtfolien (die vorzugsweise siegelfähig sind) mit einer oder mehreren Barriereschichten (typischerweise metallische Schichten oder OxidSchichten, wobei als Metall oder Oxid vorzugsweise Aluminium bzw. ein Aluminiumoxid Verwendung findet) verstanden, die den oben genannten Anforderungen (Anstieg der Wärmeleitfähigkeit und/oder flächenspezifische Gasdurchgangsrate) als Barriere gegen den Gaseintrag genügen.

Bei den oben genannten Werten bzw. bei dem Aufbau der Hochbarrierefolie handelt es sich um exemplarische, bevorzugte Angaben, die die Erfindung nicht beschränken.

Vorzugsweise handelt es sich bei dem Vakuumdämmkörper gemäß der Erfindung um einen Vollvakuumdämmkörper, d.h. um einen Dämmkörper, in dem keine weiteren wärmedämmenden Materialien, wie z.B. Schaum zum Einsatz kommt.

Vorzugsweise ist weiter vorgesehen, dass das Gerät als Wärmedämmung nur einen (oder mehrere) derartiger Vakuumdämmkörper aufweist und keine zusätzlichen wärmedämmenden Materialien zwischen der Außenseite des Gerätes und der Innenseite, d.h. dem Innenbehälter oder der Innenseite der Tür oder eines sonstigen Verschlusselementes vorhanden sind.

Weitere Einzelheiten und Vorteile der Erfindung werden anhand eines in der Zeichnung dargestellten Ausführungsbeispiels näher erläutert.

Es zeigen:
Figur 1: eine Sorptionspumpe gemäß der Erfindung in einer Explosionsansicht,
Figur 2: eine Sorptionspumpe gemäß Figur 1 im Längsschnitt und
Figur 3: eine Sorptionspumpe gemäß Figur 1 vor und nach der Endversiegelung.

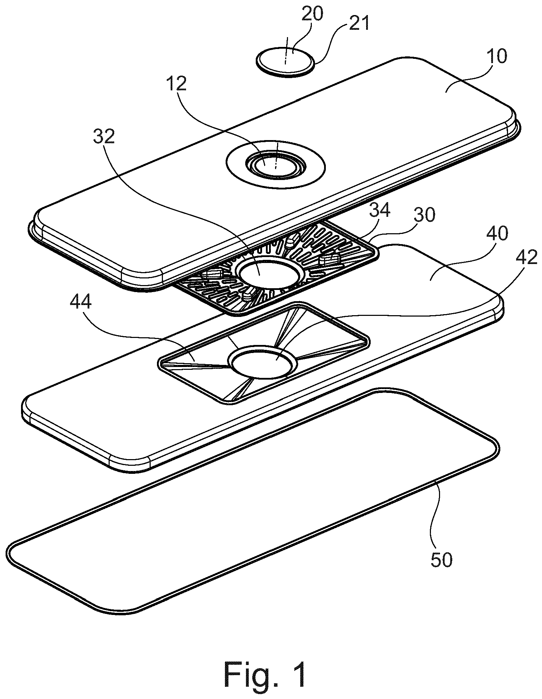

Figur 1 zeigt eine Sorptionspumpe gemäß der vorliegenden Erfindung. Die Sorptionspumpe befindet sich in einem nicht dargestellten Vollvakuumdämmkörper. Das adsorbierende Material ist noch nicht eingefüllt.

Ein derartiger Vollvakuumdämmkörper umfasst eine vakuumdichte Folie und vorzugsweise eine Hochbarrierefolie sowie ein Kernmaterial, bei dem es sich um eine Schüttung, vorzugsweise aus Perlit handeln kann.

In der Folie befindet sich eine Öffnung, durch die hindurch Luft bzw. Gas aus dem Inneren des Vakuumdämmkörpers entfernt werden kann. Dies Öffnung kann beispielsweise als Stutzen ausgeführt sein.

Um diese Öffnung herum erstreckt sich auf der Innenseite der Umhüllung, d.h. beispielsweise der Folie, d.h. auf der zu dem Kernmaterial gewandten Seite der Folie die Sorptionspumpe gemäß der Erfindung.

Gemäß Figur 1 umfasst die Sorptionspumpe eine Grundplatte 10, in der sich eine Öffnung 12 befindet, sowie einen Strömungsverteiler, der aus einem Einsatz 30 und aus einer diesen Einsatz 30 aufnehmenden Grundkörper 40 besteht. Der Einsatz 30 wird durch Formschluss in einer entsprechend der Außenkontur des Einsatzes 30 ausgeformten Vertiefung 44 des Grundkörpers 40 aufgenommen.

Die Öffnung 12 der Grundplatte 10 ist durch den Ventilteller 20 verschließbar. Dieser weist einen an dessen Außenrand angebrachten Dichtring 21 auf.

Am untersten Punkt der Vertiefung 44 befindet sich eine weitere Öffnung 42, die mit der Öffnung 32 des Einsatzes 30 und mit der Öffnung 12 der Grundplatte 10 fluchtet oder zumindest in Strömungsverbindung steht. Die Öffnung 12 der Grundplatte 10 fluchtet mit der (nicht gezeigten) Öffnung der Folie des Vakuumdämmkörpers oder steht mit dieser zumindest in Strömungsverbindung.

Somit kann beim Anlegen von Vakuum an die Öffnung in der Folie oder sonstigen Umhüllung des Vakuumdämmkörpers Gas durch diese Öffnung sowie durch die Öffnungen 42, 32 und 12 aus dem inneren Bereich des Vakuumdämmkörpers abgezogen werden.

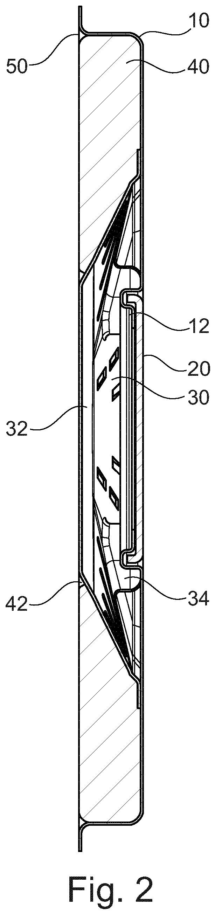

Wie dies aus Figur 1 und aus der Schnittansicht gemäß Figur 2 hervorgeht, weist der Einsatz 30 eine sich in Strömungsrichtung (beim Evakuiervorgang) erweiternde Querschnittsfläche auf, was den Vorgang der Gasentfernung aus dem Innenraum des Vakuumdämmkörpers beschleunigt. Der Einsatz 30 ist trichterartig ausgeführt, wobei sich dessen Querschnittsfläche von dem unterem, die Öffnung 32 aufweisenden Bereich nach oben, d.h. zu der Grundplatte 10 hin vergrößert.

Das Bezugszeichen 34 kennzeichnet Dome des Einsatzes 30, auf denen die Grundplatte 10 aufliegt.

Den unteren, d.h. nach innen zu dem Kernmaterial des Vakuumdämmkörpers gewandten Abschluss der Sorptionspumpe bildet ein Vlies 50.

Der trichterförmige Aufnahmebereich des Einsatzes 30 dient zur Aufnahme von adsorbierendem Material, wie z.B. von Zeolith. Dieses ist somit in dem Bereich angeordnet, der im Rahmen der Evakuierung des Vakuumdämmkörpers von Gas durchströmt wird. Das nicht an dem adsorbierenden Material adsorbierte Gas verlässt die Sorptionspumpe durch die Öffnung 12 und schließlich durch die Öffnung der Hülle des Vakuumdämmkörpers.

Figur 2 zeigt eine Schnittansicht der Anordnung gemäß Figur 1 im zusammengefügten Zustand. Aus Figur 1 und 2 ergibt sich, dass die Sorptionspumpe insgesamt kompakt ausgeführt ist und im Wesentlichen eine flache, plattenförmige und in der Draufsicht rechteckige Form aufweist.

Figur 2 zeigt ferner das Vlies 50, das den inneren, d.h. zu dem nicht dargestellten Kernmaterial gewandten Abschluss der Sorptionspumpe bildet.

Die Grundplatte 10, der Einsatz 30 und der den Einsatz aufnehmende Grundkörper 40 sind aus Blech gefertigt. Diese Bauteile sind darüber hinaus beidseitig mit siegelfähigem Material beschichtet, so dass der Strömungsverteiler bestehend aus Einsatz 30 und Grundkörper 40 durch Siegeln direkt mit der Grundplatte 10 verbunden werden kann. Ebenso wird das Vlies 50 auf die Grundplatte 10 und auf den Strömungsverteiler durch ein Siegelverfahren aufgebracht.

Die auf der Grundplatte 10 außen, d.h. gemäß Figur 1 oben liegende Siegelschicht dient zum Versiegeln der Grundplatte und somit der gesamten Sorptionspumpe mit der Innenseite der Umhüllung des Vakuumdämmkörpers.

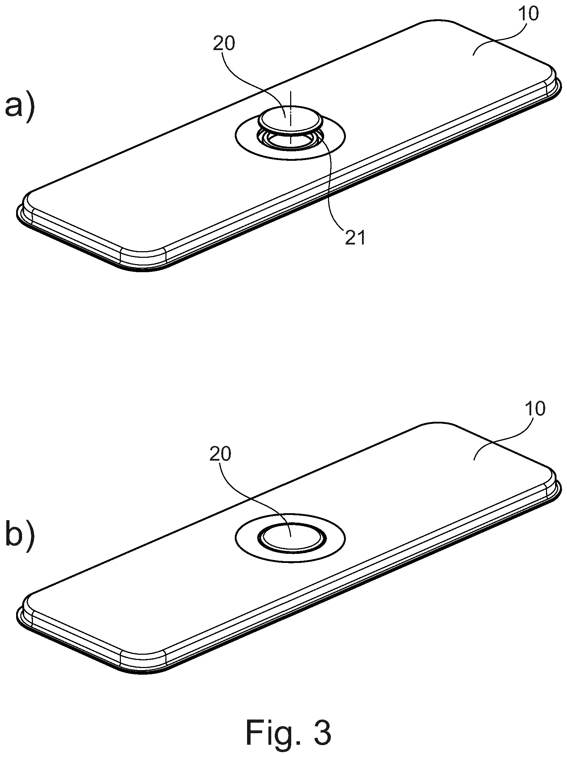

Figur 3 a) zeigt die Sorptionspumpe vor dem Schließen der Öffnung 12 mittels des Ventiltellers 20 und Figur 3 b) zeigt die Sorptionspumpe nach dem Schließen der Öffnung 12 mittels des Ventiltellers 20. Möglich ist eine primäre Abdichtung für den Transport durch die Dichtung 21. Des Weiteren weist der Ventilteller 20 eine siegelfähige Dichtung auf, die mit der Grundplatte 10 derart versiegelt wird, dass die Öffnung 12 dauerhaft vakuumdicht verschlossen ist.

## Patentansprüche

1. Vakuumdämmkörper umfassend wenigstens eine vakuumdichte Umhüllung sowie wenigstens ein Kernmaterial, das von der Umhüllung umgeben ist, wobei die Umhüllung mit wenigstens einer Öffnung, insbesondere mit wenigstens einem Evakuierstutzen zur Evakuierung des von der Umhüllung umgebenen Raums versehen ist, wobei sich in dem Vakuumdämmkörper wenigstens eine Sorptionspumpe mit einem Strömungsverteiler befindet und wobei in der Sorptionspumpe adsorbierendes Material angeordnet ist, **dadurch gekennzeichnet, dass** die Sorptionspumpe eine Grundplatte aufweist, die eine Öffnung aufweist, die mit der Öffnung der Umhüllung in Strömungsverbindung steht, wobei zwischen der Grundplatte und dem Strömungsverteiler ein Freiraum vorgesehen ist, in dem sich das adsorbierendes Material teilweise oder vollständig befindet, wobei sowohl die Grundplatte als auch der Strömungsverteiler teilweise oder vollständig aus Metall ausgeführt sind.

2. Vakuumdämmkörper nach Anspruch 1, **dadurch gekennzeichnet, dass** der Strömungsverteiler mehrteilig ausgeführt ist und aus einem Grundkörper und einem darin einfügbaren bzw. eingefügten Einsatz ausgeführt ist.

3. Vakuumdämmkörper nach Anspruch 1 oder 2, **dadurch gekennzeichnet, dass** der Strömungsverteiler eine oder mehrere Vorsprünge, insbesondere Dome aufweist, auf denen die Grundplatte abgestützt ist.

4. Vakuumdämmkörper nach Anspruch 2 und 3, **dadurch gekennzeichnet, dass** der oder die Vorsprünge an dem Einsatz angeordnet sind.

5. Vakuumdämmkörper nach einem der vorhergehenden Ansprüche, **dadurch gekennzeichnet, dass** das adsorbierende Material als Mehrzahl von einzelnen Körpern, vorzugsweise von einzelnen Kugeln oder von sonstigen Partikeln und besonders bevorzugt als Schüttung von Kugeln oder sonstigen Partikeln ausgebildet ist und/oder dass das adsorbierende Material derart ausgebildet ist, dass dieses Wasser und/oder Stickstoff und/oder Sauerstoff adsorbiert und/oder dass es sich bei dem adsorbierenden Material um wenigstens einen Getter und/oder Zeolith handelt.

6. Vakuumdämmkörper nach einem der vorhergehenden Ansprüche, **dadurch gekennzeichnet, dass** die Grundplatte und/oder der Strömungsverteiler eine Außenseite und eine dieser gegenüberliegend angeordnete Innenseite aufweist und dass sowohl die Außenseite als auch die Innenseite teilweise oder vollständig mit einem siegelfähigen bzw. versiegelten Material beschichtet sind.

7. Vakuumdämmkörper nach einem der vorhergehenden Ansprüche, **dadurch gekennzeichnet, dass** die Grundplatte und der Strömungsverteiler direkt miteinander verbunden und vorzugsweise miteinander versiegelt sind.

8. Vakuumdämmkörper nach einem der vorhergehenden Ansprüche, **dadurch gekennzeichnet, dass** ein Ventilteller vorgesehen ist, der zum Verschließen der Öffnung der Grundplatte dient oder mittels dessen die Öffnung der Grundplatte verschlossen ist, wobei der Ventilteller vorzugsweise eine siegelfähige bzw. versiegelte Dichtung aufweist, die zum vakuumdichten Verschließen der Öffnung der Grundplatte dient.

9. Vakuumdämmkörper nach einem der vorhergehenden Ansprüche, **dadurch gekennzeichnet, dass** sich über die Innenseite der Sorptionspumpe ein Flies erstreckt, um das Adsorptionsmittel in der Sorptionspumpe zu halten, wobei vorzugsweise vorgesehen ist, dass das Flies mit dem Strömungsverteiler sowie auch mit der Grundplatte versiegelt ist.

10. Vakuumdämmkörper nach einem der vorhergehenden Ansprüche, **dadurch gekennzeichnet, dass** die Sorptionspumpe in der Draufsicht rechteckig ausgebildet ist.

11. Temperiertes Gerät mit einem temperierten Innenraum sowie mit einem Verschlusselement, mittels dessen der Innenraum verschließbar ist, **dadurch gekennzeichnet, dass** der temperierte Innenraum teilweise oder vollständig von einem Vakuumdämmkörper gemäß einem der Ansprüche 1 bis 10 umgeben ist und/oder dass sich in dem Verschlusselement ein Vakuumdämmkörper gemäß einem der Ansprüche 1 bis 10 befindet.

12. Temperiertes Gerät nach Anspruch 11, **dadurch gekennzeichnet, dass** es sich bei dem Gerät um ein Kühl- und/oder Gefriergerät handelt.

13. Temperiertes Gerät nach Anspruch 11 oder 12, **dadurch gekennzeichnet, dass** es sich bei dem Verschlusselement um eine Tür handelt.

14. Sorptionspumpe zur Verwendung in einem Vakuumdämmkörper, wobei der Vakuumdämmkörper wenigstens eine vakuumdichte Umhüllung sowie wenigstens ein Kernmaterial umfasst, das von der Umhüllung umgeben ist, wobei die Umhüllung mit wenigstens einer Öffnung, insbesondere mit wenigstens einem Evakuierstutzen, zur Evakuierung des von der Umhüllung umgebenen Raums versehen ist, vorzugsweise zur Verwendung in einem Vakuumdämmkörper gemäß einem der Ansprüche 1 bis 10 und/oder zur Verwendung in einem temperierten Gerät, vorzugsweise in einem Kühl- und/oder Gefriergerät und besonders bevorzugt in einem temperierten Gerät gemäß einem der Ansprüche 11 bis 13, **dadurch gekennzeichnet, dass** die Sorptionspumpe mit einem Strömungsverteiler ausgeführt ist, wobei die Sorptionspumpe eine Grundplatte aufweist, die eine Öffnung aufweist, die mit der Öffnung der Umhüllung in Strömungsverbindung steht, wobei zwischen der Grundplatte und dem Strömungsverteiler ein Freiraum vorgesehen ist, in dem sich adsorbierendes Material befindet oder in dem adsorbierendes Material aufgenommen werden kann, wobei sowohl die Grundplatte als auch der Strömungsverteiler teilweise oder vollständig aus Metall ausgeführt sind.

15. Sorptionspumpe nach Anspruch 14, **dadurch gekennzeichnet, dass** die Sorptionspumpe gemäß dem kennzeichnenden Teil eines der Ansprüche 1 bis 9 ausgebildet ist.
